# EUROPEAN PATENT SPECIFICATION

(11) **EP 2 670 517 B1**
(45) Date of publication and mention of the grant of the patent: **19.09.2018**
(21) Application number: 12704934.4
(22) Date of filing: 31.01.2012
(51) Int. Cl.: B01D 63/06, B01D 65/00, B01D 63/12

(54) **DEVICE FOR PURIFYING RAW WATER**
VORRICHTUNG ZUR REINIGUNG VON ROHWASSER
DISPOSITIF POUR L'ÉPURATION D'EAU BRUTE

(30) Priority: 31.01.2011 NL 2006101
(43) Date of publication of application: 11.12.2013
(73) Proprietor: Enrom Beheer B.V., 2676 Maasdijk (NL)
(72) Inventor: VAN RHEE, Franciscus Wilhelmus Antonius, B-3910 Neerpelt (BE)
(74) Representative: Luten, Martin Haaije
(86) International application number: PCT/NL2012/050053
(87) International publication number: WO 2012/105835

(56) References cited:
- WO-A1-2006/017887
- WO-A1-2010/051528
- WO-A2-2009/036717
- DE-A1- 10 112 719
- US-A- 4 016 078
- US-A- 4 476 015
- US-A- 5 094 750

## Description

The invention relates to a device for purifying raw water.

Raw water, such as for instance groundwater, river water, surface water or water used in industrial processes, is often unusable in untreated form. Raw water is thus of course unsuitable for consumption, but in industrial processes it may also be necessary to purify raw water in order to avoid contaminating particles or organic compounds causing precipitation, stains, deposits, discolourations and other harmful effects in production means and causing production to run less efficiently or even making it impossible. In horticulture for instance plant growth can be stimulated by having the fewest possible ballast elements in the water. Being able to purify sea water efficiently may for instance also be desirable for drilling islands and platforms. Water purification has to be provided on a large scale and with sufficiently great capacity particularly for the above stated industrial applications.

The known device comprises an inlet for the raw water and a conduit system which is connected to the inlet and in which a separating unit is incorporated for separating feed water into a pure fraction (also referred to as permeate) and an impure fraction (also referred to as concentrate). In the context of the present application feed water refers to water which comprises raw water and, if desired, also impure water from a return or recycling conduit incorporated in the device. A pump system is further incorporated in the conduit system for carrying the feed water under pressure through the conduit system and the separating unit, wherein the feed water is separated into a pure and an impure fraction, which fractions are then discharged via their respective outlets. The separation can for instance be performed by filtration such as ultrafiltration and/or nanofiltration. Preferably applied however are filtration methods on the basis of the principle of reverse osmosis. The feed water for purifying is carried through a filter unit in which a partially permeable membrane is received over which there is a pressure difference generated by the pump system. The extent of the pressure difference and the type of membrane (retention and the like) define the speed at which the pure fraction (permeate) is extracted. The larger molecules present in the feed water, such as salts, minerals, bacteria, are at least partly retained by the membrane and discharged as impure fraction (concentrate).

High salt contents (Total Dissolved Solids: TDS) can occur in water purification plants, particularly in devices which make use of reverse osmosis. This results in high system pressures and high risk of corrosion (particularly in the concentrate). In respect of the high pressures occurring, the known device makes use of stainless steel for the couplings and conduits. This has the effect of increasing costs and only partially resolves corrosion problems.

The known device further has the drawback, among others, that the operation thereof is greatly dependent on the degree of contamination of the supplied raw water and on the quantity of raw water to be processed. The known device also takes up a relatively large amount of space. For this reason a separate design taking the requirements into account is generally made in industrial use for each specific application. A drawback hereof is that the known device cannot then be readily adapted to changing conditions, and is very costly. Because devices for purifying raw water on industrial scale generally require high investment, it is not unusual to over-dimension such a device so as to nevertheless still achieve some flexibility. Such a device will however operate (far) below its design capacity, which is undesirable.

There is therefore a need for a device for purifying raw water which can be modified in relatively simple manner to changing requirements and conditions and which can at the same time purify relatively large quantities of raw water at a low cost price and with relatively low energy WO2010/051528 discloses manifold blocks used in a pressurized membrane water treatment system.

This and other objects are achieved according to the invention by a device for purifying raw water as according to claim 1. A device is particularly provided which comprises an inlet for the raw water, a conduit system connected to the inlet, a pump system incorporated in the conduit system for carrying the feed water under pressure through the conduit system, at least one separating unit incorporated in the conduit system for separating the feed water into a pure fraction (permeate) and an impure fraction (concentrate), outlets for the pure and the impure fraction connected to the conduit system, wherein the device comprises two panels forming a front and a rear panel which are held at a mutual distance and between which at least one separating unit is situated, wherein the panels are constructed from mutually coupled panel modules which form a bearing frame for the separating units by directly coupling them to panel modules, which panel modules comprise through-feed conduits which in connected situation form at least a part of the conduit system which runs between the front and rear panel, and wherein at least one of the panel modules has a connection for a separating unit and a through-feed conduit for permeate coupled to the connection, a through-feed conduit for feed or impure water coupled to the connection and a through-feed conduit for feed or impure water not coupled to the connection.

Such a direct coupling is understood to mean that the separating units are coupled to the panel modules without interposing separate conduits. In the invented device the panels not only function as holder for the separating unit but also as means for through-feed of the feed and permeate and concentrate. By constructing the panels as an assembly of mutually coupled panel modules a flexible device is obtained which can be easily increased or decreased in capacity by means of respectively adding or removing panel modules (with corresponding separating unit). According to the invention the device comprises a first panel module (A) with a connection for a separating unit, and a through-feed conduit for permeate coupled to the connection, a through-feed conduit for feed or impure water coupled to the connection, and a through-feed conduit for feed or impure water not coupled to the connection. If panel module A is connected upstream to a separating unit, the connection option for the feed water will then be located on the inlet side. If panel module A is connected downstream to a separating unit (on the side where the concentrate exits), the connection for the impure water will then be located on the impure side of the connection. A device according to the invention makes it possible in compact manner to provide a plurality of circuits of mutually coupled separating units.

By manufacturing the panel modules from plastic, costs and corrosion hardly represent a problem any longer. The modular construction of the device according to the invention has the further advantage that it can be assembled into a whole at relatively low cost and moreover provides an efficient service.

According to the invention the through-feed conduits of the panel modules in the connected situation form at least a part of the conduit system. The adaptability of the device is further enhanced when in a preferred embodiment of the invention a device is provided in which the through-feed conduits of the panel modules in the connected situation form substantially the whole conduit system. Such an embodiment comprises practically no pipe-work except for the through-feed conduits arranged in the panel modules, which is a great advantage because corrosion and leakage are prevented and the chance of maintenance is reduced. It will be apparent that the device can, if desired, comprise several other conduits which do not run in the assembled panels but which for instance run between panels. When adjusting the capacity it is then - in addition to changing the number of panel modules and separating units - not necessary in many cases, though possibly necessary in some cases, to modify these conduits, for instance the feed conduit, to the changed capacity and/or operation if desired.

Another preferred embodiment of the device according to the invention comprises a device in which the panels comprise a limited number of a maximum of five mutually differing panel modules. Such a device makes use of a limited number of standardized panel modules. It has been found that with such a limited number of panel modules it is still possible to manufacture practically all desired designs on industrial scale.

In the assembled situation the panels of the device preferably form a front panel and a rear panel, between which run a number of separating units. If desired, the front panel can be provided with indications for the user, such as for instance a dial gauge for the pressure produced by the pump system.

Although it is possible in principle to apply any suitable separating unit in the invented device, a preferred embodiment of the device comprises at least one separating unit in the form of a water purification filter of the membrane type, provided with a first connection for supplying raw water or a mixture of raw water and fed-back recycling water (so-called feed water), a second connection for discharging the pure fraction (or permeate), and a third connection for discharging the impure fraction (or concentrate). Such water purification filters are per se known and generally take a cylindrical form.

A further embodiment of the device according to the invention is characterized in that a (front) panel of the panels comprises an infeed module, which infeed module comprises the inlet and an outlet for the feed water coupled via a through-feed conduit to the inlet, and further inlets and outlets, likewise coupled via through-feed conduits, for permeate and concentrate coming from a coupled panel module. According to the present embodiment, devices with a different capacity and/or operation will in principle always be provided with the infeed module. Supply and discharge conduits for the device hereby need not be modified or uncoupled in the case the capacity and/or operation is modified.

According to another aspect of the invention, a device is for the same reason provided in which a (rear) panel of the panels comprises a control module, which control module comprises inlets and outlets coupled via through-feed conduits for concentrate coming from a coupled panel module and/or infeed module, and is further provided with control means and/or measuring means. Such control means and/or measuring means can for instance comprise non-return valves, regulating needles, flow meters and/or pressure sensors, but are not limited to these specific examples. The control and/or measuring means arranged in the relevant panel ensure that the flow of the water in the device takes place in the desired manner. The concentrate can thus for instance be separated into a recyclate (the usual option) and waste water by means of the control and measuring means.

In an aspect of the invention a (block-shaped) panel module is provided, comprising a connection for a separating unit for separating feed water into a pure fraction (permeate) and an impure fraction (concentrate), which separating unit is provided for this purpose with an inlet side, a pure side and an impure side, which panel module comprises at least a through-feed conduit for permeate coupled to the pure side of the connection and/or a through-feed conduit for feed or impure water coupled to the inlet side of the connection, and/or a through-feed conduit for concentrate coupled to the impure side of the connection. The (block-shaped) panel module preferably comprises a draw-off point for monitoring the permeate quality.

Yet another preferred embodiment according to the invention comprises a device provided with a second panel module B, which has a connection for a separating unit and a through-feed conduit for permeate coupled to the connection, wherein the panel module B further comprises a through-feed conduit for feed or impure water coupled to the connection, but no through-feed conduit for feed or impure water not coupled to the connection. As for panel module A, it is also the case for panel module B that, when it is connected upstream to a separating unit, the connection for the feed water will be located on the inlet side of the connection. If panel module B is connected downstream to a separating unit (on the side where the concentrate exits), the connection for the impure water will then be located on the impure side of the connection. An additional advantage of panel module B is that it also prevents stagnant water in conduit parts.

Another further preferred embodiment according to the invention comprises a device provided with a third panel module C, which has a connection for a separating unit and a through-feed conduit for permeate coupled to the connection, wherein the panel module C further comprises at least two through-feed conduits for feed or impure water not coupled to the connection, but no through-feed conduit for feed or impure water coupled to the connection. Panel module C is adapted to further purify already purified permeate into extra-pure permeate. The impure side is coupled for this purpose to the permeate coupling of other panel modules, and the extra-cleaned permeate is not connected thereto.

A device with panels constructed from the above stated standardized panel modules A, B and C is able to realize almost all desired designs on industrial scale, wherein the transition from one design to another takes place in simple manner by varying the number of panel modules and/or changing the arrangement between the panel modules. It will be apparent that an arrangement of panel modules is such that the through-feed conduits present therein form an uninterrupted conduit system in the assembled situation.

The connections between the panel modules themselves and between a panel module and a separating unit can be embodied in any conceivable manner. It is thus possible for instance to embody the connection of through-feed conduits present in different panel modules by pressing the openings formed in the contact surface by the through-feed conduits onto each other and providing the contact surfaces round the openings with a groove in which an elastic sealing ring is arranged in order to prevent leakage. It is also possible to provide each contact surfaces to be coupled (for instance between a panel module and a tubular separating unit) with a mutually fitting profile. It will be apparent that the connections take a watertight form. As already noted above, it is possible according to an embodiment to characterize the device in that a through-feed conduit forming part of the conduit system runs from a panel to another panel, for instance from the front panel to the rear panel. If desired, the device according to the invention can also comprise a return conduit running from the rear panel to the front panel for feedback of a part of the impure fraction (recycling) to a point in the conduit system located upstream of the pump system for the purpose of mixing this part with the raw water being supplied to the pump system. Feed water is hereby obtained. In determined cases a greater efficiency of the separating process is hereby achieved. By making the connections of the panel modules suitable for coupling to such inter-panel through-feed conduits, the modules can be coupled to almost any desired connection. This makes it possible to adapt the conduit system to the conditions, and so change the course of the raw or treated water.

An embodiment of the device according to the invention which is favourable owing to the simplicity of embodiment comprises block-shaped panel modules in which through-feed channels debouch at least in an upper surface and a lower surface of the panel modules. Such panel modules can be easily stacked on each other, wherein they form an assembled panel of in principle unlimited height. Such an embodiment can be readily extended in the height, whereby an increased capacity and, if desired, a different design can be realized without this adding to the floor surface required.

In order to enable simple assembly of the panel modules into one panel it is advantageous to provide the panel modules with dowel pins. This also achieves an at least partial anchoring and mutually correct positioning. With a suitable selection of the location and shape of the dowel pins it is also possible to avoid panel modules being coupled to each other in incorrect manner. Dowel pins can be omitted when the panel modules are mutually connected by connecting bushes which both seal better and form the positioning.

In order to obtain a substantially watertight conduit system the panel modules themselves and the panel modules and separating units must be coupled to each other in water-tight manner. A device in which the panels and the panel modules are mutually connected by a pull rod, for which purpose the panel modules are provided with engaging means for a pull rod or cable, has advantages here because of the simplicity and proven reliability.

If desired, the panel modules are reinforced with metal plates which are for instance arranged on the side of the panel modules remote from the separating units.

In a preferred embodiment of the invention a device is provided in which the connections of the through-feed conduits incorporated in the panels can be closed. Such an embodiment has the additional advantage that it can optionally be temporarily adjusted to the desired capacity by temporarily uncoupling a part of the panel modules and separating units by closing the associated connections.

If desired, the device according to the invention can comprise other auxiliary means in addition to the separating units. It is thus possible for instance for the device to comprise upstream of the at least one separating unit a back flow safety, preferably an atmospheric interrupter or break tank, incorporated in the conduit system. Such a back flow safety prevents raw water from possibly being able to flow back into a connected feed conduit and can be coupled in simple manner to connections in the infeed module provided for this purpose. It is also possible to provide the device according to the invention with a filter unit received upstream of the at least one separating unit in the conduit system for the purpose of removing the larger dirt particles from the raw water by pre-filtering thereof. Another option comprises of adding to the device a dosing device received upstream of the at least one separating unit in the conduit system for dosed feeding of an additive, such as for instance an anti-fouling agent, to the raw water or feed water.

In order to prevent contamination and possible clogging of the filter units the device comprises according to another aspect of the invention a flushing circuit for flushing the at least one separating unit with raw water and/or with clean water. If desired, the front and/or rear panel is provided for this purpose with a connection. It is hereby also possible to clean the filter units without having to remove them (so-called "cleaning in place").

The invention will now be further elucidated with reference to the following figures, without otherwise being limited thereto. Herein:
figure 1 is a schematic side view of an embodiment of the device according to the invention in the assembled situation;
figure 2A is a schematic perspective view of the embodiment of the device according to the invention shown in figure 1 in the assembled situation;
figure 2B is a schematic perspective view of a part of the embodiment of the device according to the invention shown in figure 1 in non-assembled situation;
figures 3A and 3B show a perspective rear view and a cross-section through the centre plane of an infeed module according to the invention;
figures 4A and 4B show a perspective rear view and a cross-section through the centre plane of a control module according to the invention;
figures 5A and 5B show a perspective rear view and a cross-section through the centre plane of a panel module A according to the invention;
figures 6A and 6B show a perspective rear view and a cross-section through the centre plane of a panel module B according to the invention;
figures 7A and 7B show a perspective rear view and a cross-section through the centre plane of a panel module C according to the invention;
figure 8 shows a schematic representation of a design according to an embodiment of the invented device in the assembled situation;
figure 9 shows a schematic representation of a design according to another embodiment of the invented device in the assembled situation; and
figures 10-12 show a schematic representation of a number of other possible designs of the invented device in the assembled situation.

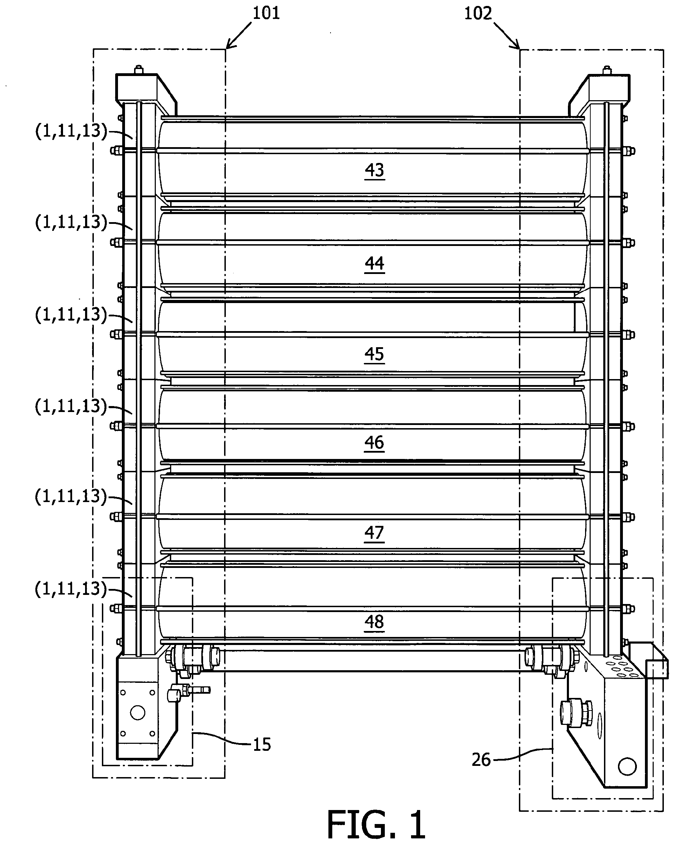

Referring to figure 1, an embodiment of a water purification device 100 according to the invention is shown in schematic side view. The shown device 100 comprises substantially a front panel 101 and a rear panel 102 which are held at a mutual distance by a number of intermediate tubular separating units (43, 44, 45, 46, 47, 48). The panels (101, 102) are constructed from mutually coupled panel modules (1, 11, 13), an infeed module 15 and a control module 26.

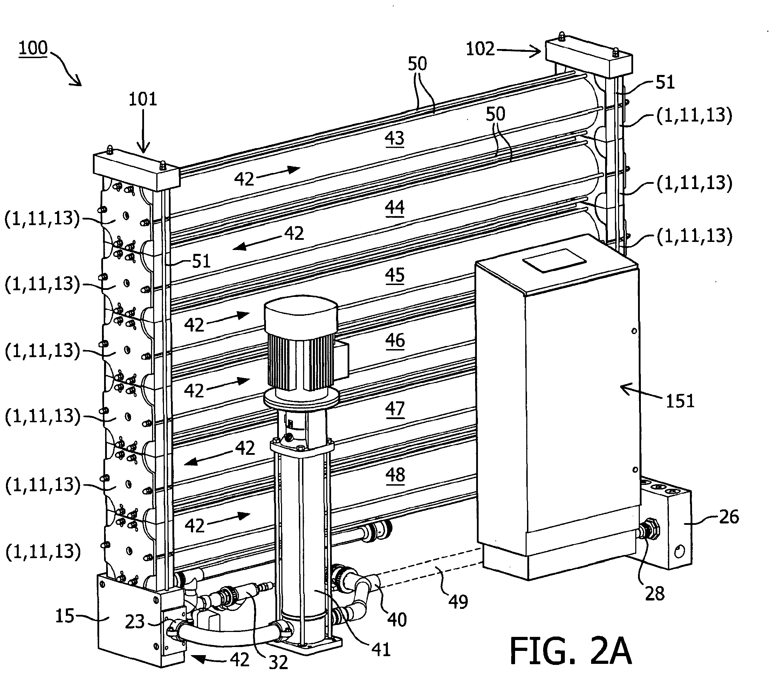

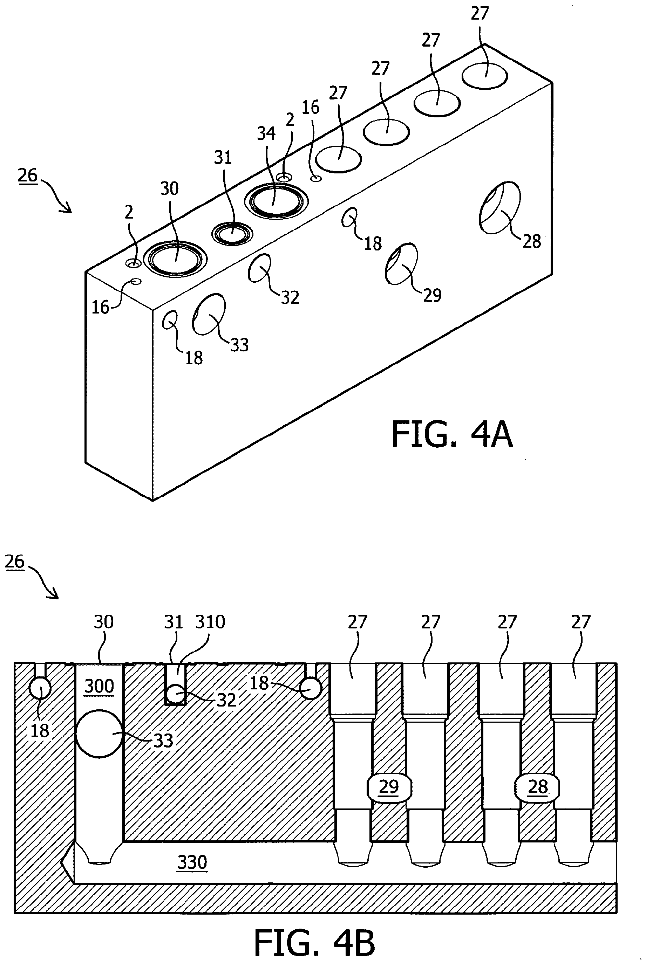

Referring to figure 2A, the embodiment of a water purification device 100 according to the invention shown in figure 1 is shown in schematic perspective view. In the shown embodiment the panel modules (1, 11, 13, 15, 26) are block-shaped and mutually connected by vertically running pull rods or cables 51. The pull rods or cables 50 received between the two panels (101, 102) are fastened to the associated panel modules by means of for instance nut connections. The pull rods (50, 51) ensure that the panel modules (1, 11, 13, 15, 26) and the assembled panels (101, 102) are held together, wherein the tubular separating units (43, 44, 45, 46, 47, 48) form spacers for the panels (101, 102). Device 100 further comprises an inlet 40 for raw water and a conduit system connected to inlet 40. Panel modules (1, 11, 13), infeed module 15 and control module 26 comprise through-feed conduits which in the shown connected situation form a significant part of the conduit system. The conduit system is therefore partly concealed from view because it is located substantially in the panel modules (1, 11, 13, 15, 26). Arranged in the conduit system is a pump system in the form of at least one high-pressure pump 41 for carrying the feed water under pressure through the conduit system in the direction of arrows 42 indicated in figure 1. A number of tubular separating units (43, 44, 45, 46, 47, 48) is further incorporated in the conduit system. The tubular separating units (43, 44, 45, 46, 47, 48) comprise one or more membrane separators and separate the feed water into a pure fraction or permeate, which is discharged via an outlet 32 connected to the conduit system, and an impure fraction or concentrate which is carried from the infeed module via an inlet 30 and optionally 33 shown in figures 4A and 4B to the control module. Separation into waste water (28) and recycling water (49) then optionally takes place. In the shown exemplary embodiment the membrane separators are based on reverse osmosis in which hyperfiltration filters are applied. As will be further elucidated below, one tubular separating unit (43, 44, 45, 46, 47, 48) can comprise a plurality of membrane separators connected in series. If desired, the infeed module is provided with a pressure gauge with which the system pressure can be read by the user.

The conduit system can also be provided with a recycling or return conduit 49 as shown with a broken line in figure 2A and which feeds back a part of the concentrate coming from control module 26 to a point in the conduit system located upstream relative to high-pressure pump 41, wherein this part is mixed with the raw water which is being supplied to pressure pump 41 via feed conduit 40 and thus forms the feed water.

The device is further provided with an electronic control box 151 in which a PLC is arranged, in addition to an optional display arranged on the side visible to the user, optional pressure gauges, electrical connections for connection to the mains electricity and other useful components. The operation of a PLC is generally known to a person skilled in the art and is not further elucidated here.

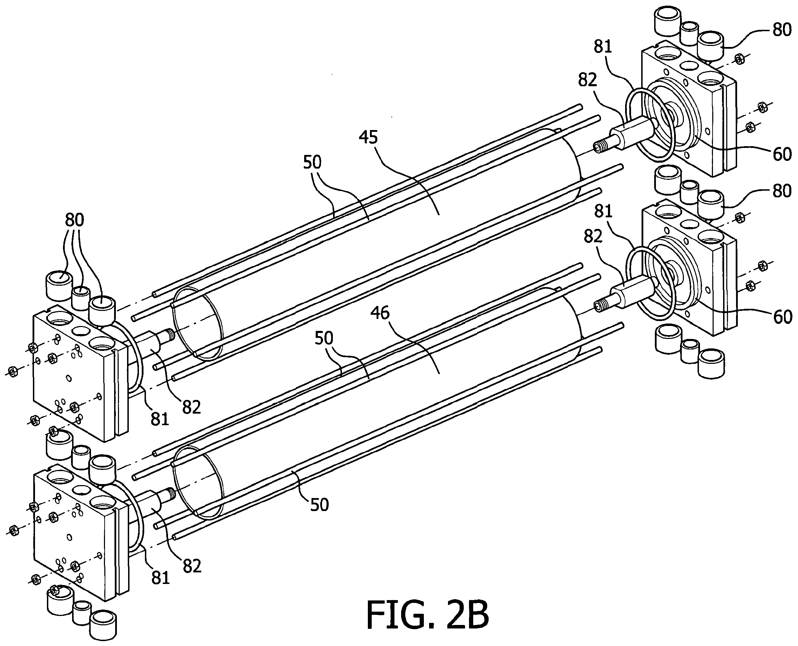

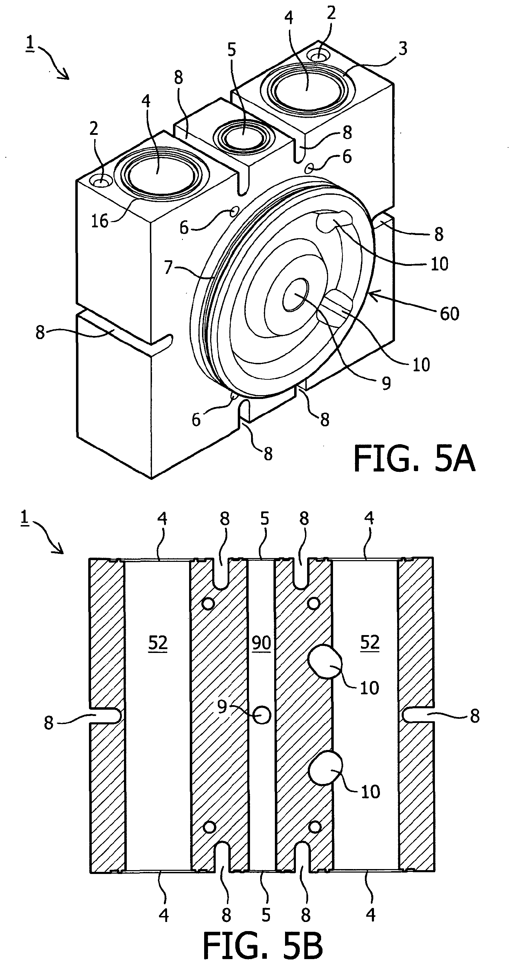

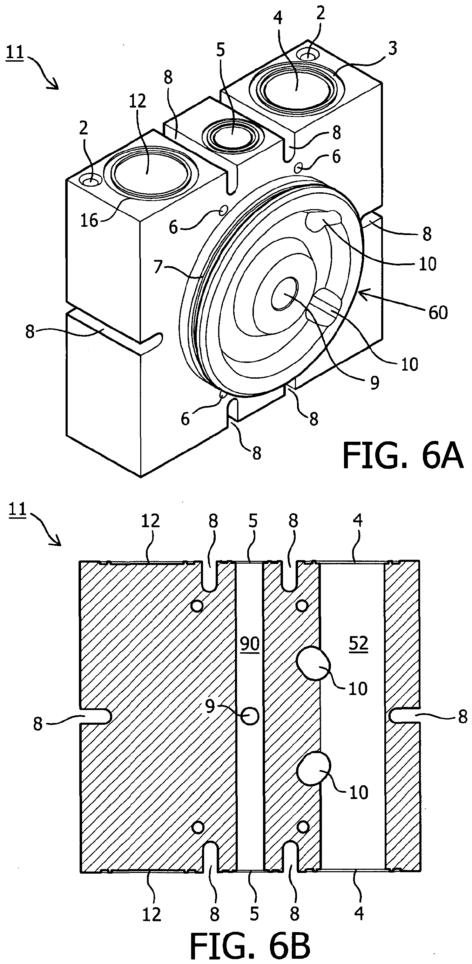

Figure 2B shows the block-shaped panel modules (1, 11, 13) in an embodiment in which they are connected substantially watertightly to each other by connecting bushes 80 which connect the through-feed channels of adjacent panel modules to each other and are received fittingly therein. Two tubular separating units (45, 46) arranged in parallel form spacers for the panel modules (1, 11, 13). Panel modules (1, 11, 13) comprise an annular connection 60, the peripheral edge of which is provided with a groove 7 running in the peripheral direction for a sealing ring 81. The connection is designed such that it can connect substantially watertightly to an end surface of the tubular separating unit (45, 46). For coupling to the pure side of connection 60 (the opening at the position of the central axis of connection 60) use is made if desired of a coupling piece 82 which connects on the one side to the central opening of connection 60 and on the other to the central part of a separating unit. For coupling to the impure side of connection 60 the panel modules are provided with openings 10 suitable for this purpose (see for instance figures 5A, 5B, 6A and 6B).

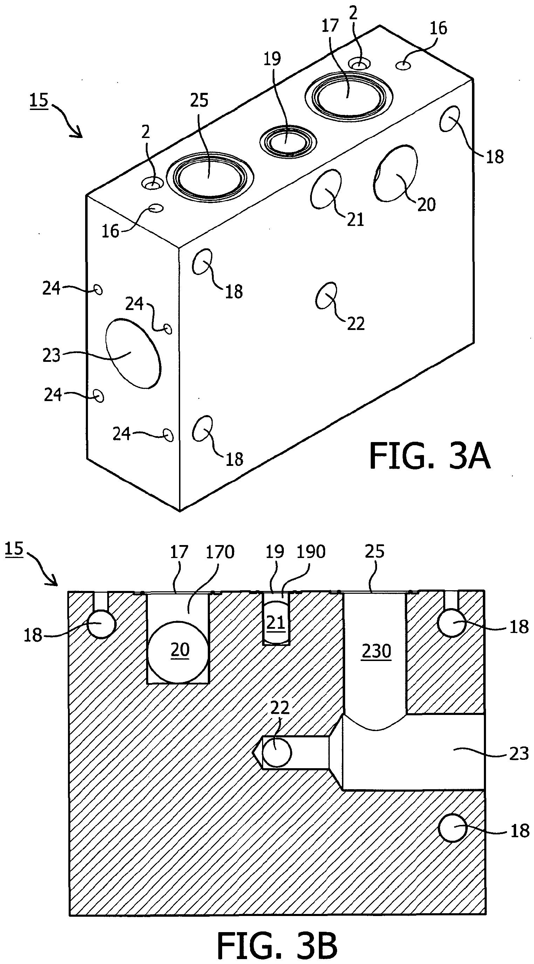

Referring to figures 3A and 3B, an infeed module 15 is shown which generally supports with its underside on the floor or a frame. In the shown embodiment infeed module 15 forms the lowest module of front panel 101. The shown infeed module 15 comprises inlet 23 for feed water coming from conduit 40 and an outlet 25 for the feed water coupled via a through-feed conduit 230 to inlet 23. Infeed module 15 further also comprises inlet 19 and outlet 21 coupled via a through-feed conduit 190 for permeate coming from a panel module coupled to infeed module 15. Also present are an inlet 17 and outlet 20 coupled via through-feed conduit 170 for concentrate coming from a panel module coupled to infeed module 15. An inlet 22 is further provided for infeed of flushing water. Infeed module 15 is provided with engaging means for pull rods 50 in the form of holes 18 in which the threaded bush of a pull rod can for instance be received. For attachment of infeed module 15 to other modules, holes 16 are provided in the same way for vertical pull rods 51. Finally, the feed side of infeed module 15 is provided with fastening holes 24 for high-pressure pump 41 and on the upper surface with dowel pins 2 or connecting bushes for a module lying thereabove.

Referring to figures 4A and 4B, a control module 26 is shown which generally also supports with its underside on the floor or on a frame. In the shown embodiment control module 26 forms the lowest module of rear panel 102. The shown control module 26 comprises an inlet 31 coupled via a through-feed conduit 310 for permeate coming from a coupled panel module, and an outlet 32 for this permeate. Outlet 32 functions as outlet for water purified by the device. In addition, control module 26 comprises an inlet 30 coupled via a through-feed conduit 300 for concentrate coming from a coupled panel module and an inlet 33 for concentrate coming from a separating unit (43, 44, 45, 46, 47, 48). Both inlets (30, 33) are coupled via through-feed conduit 330 to an outlet 28 for the waste water. If desired, a part of the concentrate can be fed back via outlet 29 to the infeed block via return conduit 49 (recycling) (see figure 1). Return conduit 49 is connected for this purpose to outlet 29. The concentrate flow discharged via outlet 28 and the concentrate flow fed back via outlet 29 to the pump can be controlled by regulating needles (not shown) to be arranged in openings 27. In the shown embodiment inlet 34 is masked. In the same manner as in infeed module 15, control module 26 is provided with engaging means for pull rods 51 in the form of holes 18, in which the threaded bush of a pull rod can for instance be received and, for attachment of control module 26 to other modules, with fastening holes 16 for vertical pull rods 51. The infeed side of control module 26 (the upper side) is also provided with dowel pins 2 or connecting bushes for fittingly placing a module lying thereabove.

Front panel 101 and rear panel 102 are constructed according to the embodiment shown in figure 1 from three standardized panel modules 1, 11 and 13, which are described in more detail hereinbelow.

Referring to figures 5A and 5B, a block-shaped panel module 1 of the type A is shown. Panel module 1 comprises an annular connection 60, the peripheral edge of which is provided with a groove 7, running in the peripheral direction, for a sealing ring. The connection is designed such that it can connect substantially watertightly to an end surface of a tubular separating unit (43, 44, 45, 46, 47, 48). A suitable tubular separating unit (43, 44, 45, 46, 47, 48) comprises a cylindrically formed conduit in which cylindrically shaped, semi-permeable membranes are also received. In such a tubular separating unit (43, 44, 45, 46, 47, 48) the feed water to be purified is guided from the peripheral edge, through the membranes and to the axis of the cylinders (so radially inward from outside) under the influence of a pressure difference generated by pump 41. The purified water is therefore collected in the vicinity of the axis and there discharged via an outlet side which is also referred to in the context of the present application as pure side or permeate side of the separating unit (43, 44, 45, 46, 47, 48). The peripheral edge of the tubular separating unit (43, 44, 45, 46, 47, 48) where the feed water enters is also referred to in the context of the present application as the inlet side. The unpurified water likewise leaves the separating unit via the peripheral edge on the side referred to in the context of the present application as the impure or concentrate side. Panel module 1 comprises a through-feed conduit 90 for permeate which can flow in and out of the panel module via passages 5. Through-feed conduit 90 is coupled via inlet 9 to the pure side (close to the axis) of connection 60. Panel module 1 further comprises two through-feed conduits 52 for feed water or concentrate, depending on the position of panel module 1 in device 100. These conduits 52 are coupled to another panel module via passages 4. At the position of the connection one of the through-feed conduits 52 (in figure 4B the conduit on the right-hand side) debouches in a passage 10 which is coupled to the impure side (close to the peripheral edge) of connection 60 and therefore of a separating unit (43, 44, 45, 46, 47, 48) coupled thereto. In the same way as in the case of infeed module 15 and control module 26, panel module 1 is provided with dowel pins 2 or connecting bushes for fittingly placing a module lying thereabove. Panel module 1 further comprises edge recesses 8 for pull rods 50 and tapped holes 6 in which pull-off screws (not shown) can be placed to enable a module to be pressed easily off a separating unit and other adjacent module under pressure when device 1 is modified. In order to avoid leakage the passages (4, 5) are also provided with a peripheral groove 3 in which an elastic sealing ring can be received.

Referring to figures 6A and 6B, a block-shaped panel 11 of the type B is shown. Panel module 11 comprises a large number of components corresponding to panel module 1, for the description of which reference is made to the relevant description of panel module 1. In contrast to panel module 1, panel module 11 comprises only one through-feed conduit 52 for concentrate or feed water coupled to the impure or feed side of connection 60. For this purpose the passage 4 on the left on panel module 11 shown in figure 5 is masked.

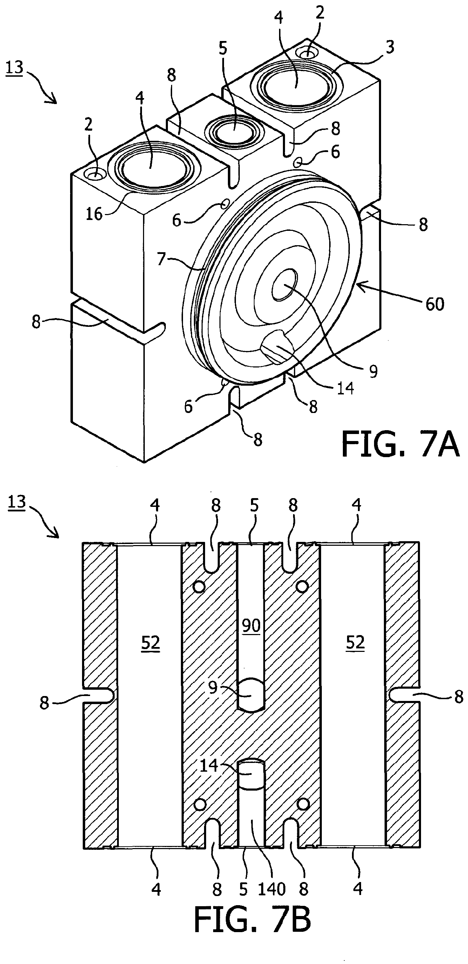

Referring to figures 7A and 7B, a block-shaped panel module 13 of the type C is shown. Panel module 13 comprises a large number of components corresponding to panel module 1, for the description of which reference is made to the relevant description of panel module 1. In contrast to panel module 1, panel module 13 does comprise two feed-through conduits 52 for concentrate or feed water, although they are not coupled to the impure or feed side of connection 60. Panel module 13 further comprises a through-feed conduit 140 for permeate coupled to the impure side (close to the peripheral edge) of connection 60 via outlet 14. In contrast to panel module 1, panel module 13 does not comprises a through-feed conduit 52 for feed or impure water coupled to the inlet side of the connection via passages 10. In this embodiment outlet 14 functions as inlet for permeate for further purification. The extra-purified permeate flows out via connection 9.

The device for purifying raw water according to the invention can be adapted to the conditions and requirements in simple manner by means of the modular construction. A device with panels which are constructed from the above stated standardized panel modules 1, 11 and 13 (respectively of the type A, B and C) is able to realize practically all desired designs on industrial scale, wherein the transition from one design to another takes place in simple manner by varying the number of panel modules (1, 11, 13, 15, 26) and/or changing the arrangement between the panel modules (1, 11, 13, 15, 26). The arrangement of the panel modules (1, 11, 13, 15, 26) is such that the through-feed conduits present therein form in the assembled situation an uninterrupted conduit system through which the water is carried from infeed module 15 via the separating units (43, 44, 45, 46, 47, 48) to control module 26. When for instance a high permeate flow is required, a plurality of separating units (43, 44, 45, 46, 47, 48) will be necessary. When a lower permeate flow is required, it can suffice to provide a device with fewer separating units (43, 44, 45, 46, 47, 48). Depending on the specific wishes of the customer, it is also possible to select cleaning modules subject to the raw water quality and the desired permeate quality. These wishes substantially define which configuration of panel modules will be selected.

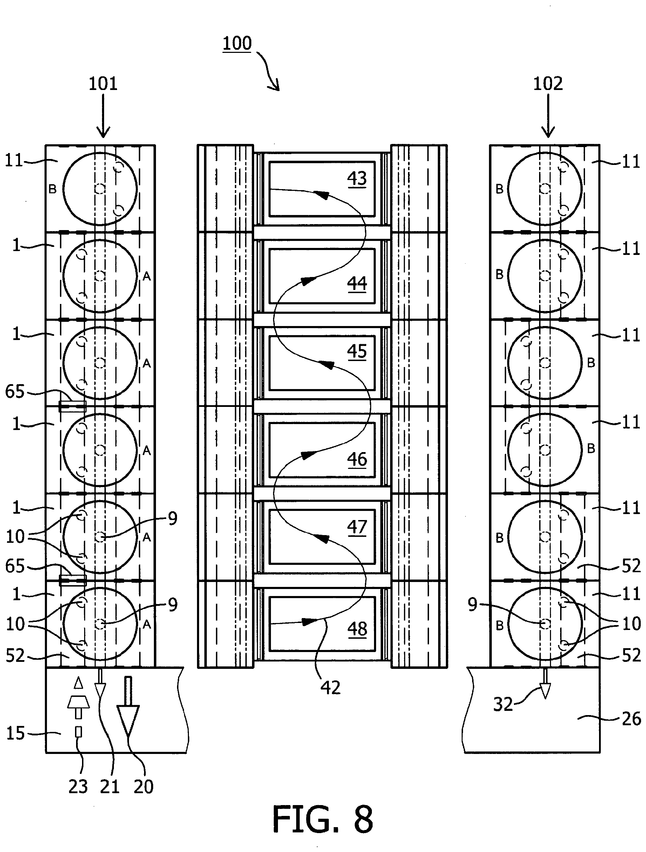

Referring to figure 8, an example is shown of a device 1 which comprises on the left-hand side (the infeed side) a front panel 101 which is constructed from five panel modules 1 (type A) stacked onto each other and a panel module 11 (type B) on top of these. On the right-hand side (the discharge side) rear panel 102 is constructed from six panel modules 11 (type B) which are stacked onto each other but which are oriented in different manner. The two lower panel modules 11 are connected to each other via the outlets 10 coupled by through-feed conduit 52. The two subsequent panel modules 11 are likewise coupled to each other, but are not coupled to the panel module 11 lying thereunder because through-feed conduit 52 is interrupted. As can be seen in the central figure, six single separating units (43, 44, 45, 46, 47, 48), each provided with a cylindrical membrane (not shown), are arranged between the two panels (101, 102). The feed water is supplied via inlet 23 to first module 1 via conduit 52 and carried through first separating unit 48 in the direction of arrow 52. The permeate exiting via outlet 9 is discharged via outlet 32 of control module 26. The concentrate flowing on the peripheral side of separating unit 48 is carried via outlets 10 of lowest panel module 11 of rear panel 102 to conduit 52 and flows via passages 10 of second panel module 11 into second separating unit 47 (from the right to the left), as indicated by arrow 42. Once it has passed through second separating unit 47, the purified permeate is discharged via central opening 9 of second panel module 1 on the left, and the concentrate is carried via passages 10 of the second panel module 1 on the left to the third panel module 1 on the left. This sequence is then repeated a number of times more until the water has passed through the entire route indicated by arrow 42. It will be apparent that, with the specific connection of panel modules 1 and 11, a membrane separation is obtained wherein the different separating units are passed through in series. In this way a high permeate flow is obtained without much space being necessary. In the shown embodiment conduits 52 are provided with plugs 65 which block in situ direct throughflow in conduits 52.

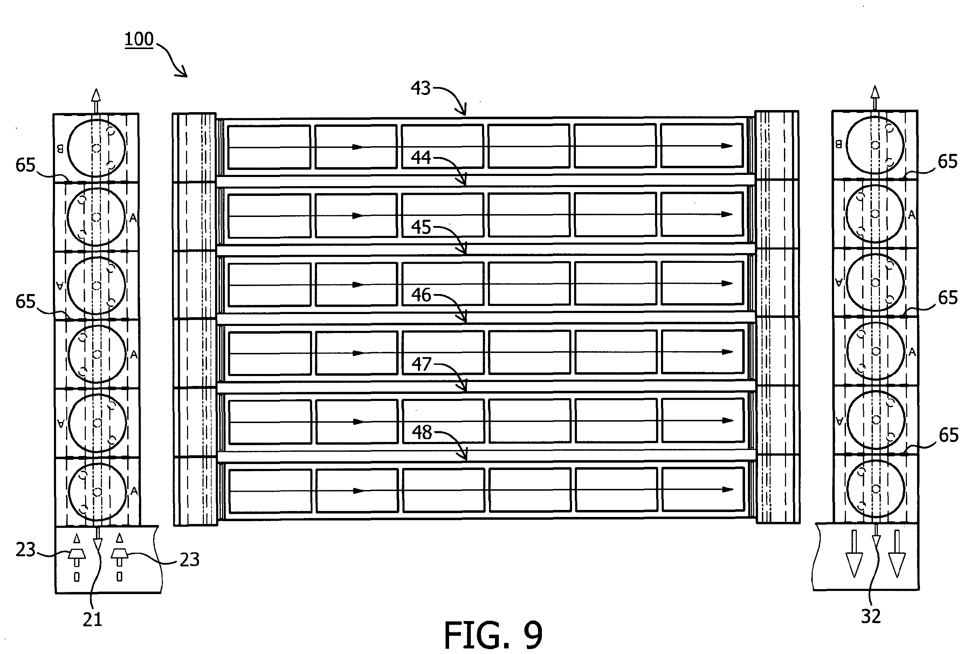

A second example of another design is shown in figure 9. With the indicated specific connection of three different standard types of panel module 1 (type A), 11 (type B) and 13 (type C) a two-fold double separation is obtained by means of separating units (43, 44, 45, 46, 47, 48), which in the present embodiment mixes the permeate of twofold 6-series-connected membranes and cleans it again along one 6-series-connected membranes.

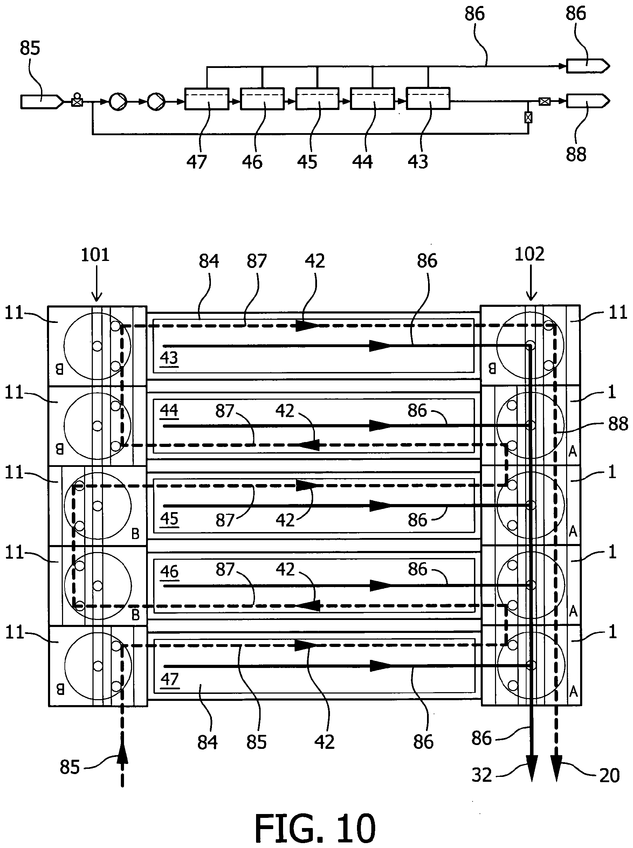

Referring to figure 10, another example is shown of an embodiment which comprises on the left-hand side (the feed side) a front panel 101 which is constructed from five panel modules 11 (type B) stacked onto each other, and on the right-hand side (the discharge side) rear panel 102 is constructed from four panel modules 1 (type A) stacked onto each other, wherein a plug (not shown) is present between the second and the third module of the type A, and a panel module 11 (type B) on top of these. As shown in figure 10, five single separating units (43, 44, 45, 46, 47) are arranged between the two panels (101, 102). The single separating units are each provided with only one cylindrical membrane 84.

Modules A and B can be oriented in different ways, whereby a different through-feed channel is created between the different modules. The specific stacking of front panel 101 and rear panel 102 results in the series connection as shown in the upper part of figure 10.

Feed water 85 is supplied via the inlet to first module 11 and carried through the first separating unit 47 in the direction of arrow 42. A separation takes place in the separating unit wherein permeate 86 is discharged as according to arrow 32 via the central outlet of the lowest panel module 1. Concentrate 87 (a part of feed water 85) flowing out downstream on the peripheral side of separating unit 47 is carried via the impure outlet of the lowest panel module 1 of rear panel 102 to the impure inlet of second panel module 1, and from there to the impure side of second separating unit 46, in which it then passes through separating unit 46 from right to left as according to arrow 42. Once it has passed through the second separating unit 46, the purified permeate 86 is discharged via the central opening of second panel module 1 on the right-hand side and the concentrate is carried from the second panel module 11 on the left to the third panel module 11 on the left. This sequence is then repeated a number of times more until the water has passed through the entire route indicated by arrows 42 and is discharged in the form of final concentrate 88 via through-feed conduit 52 of panel modules 1 as according to arrow 20. It will be apparent that a membrane separation is obtained due to the specific connection of panel modules 1 and 11, wherein the different separating units are passed through in series. In this way a high degree of purity is achieved and a high permeate flow is obtained without much space being necessary. The panel modules of type B, and their specific placing, ensure that undesired throughflow from one panel module to another is blocked.

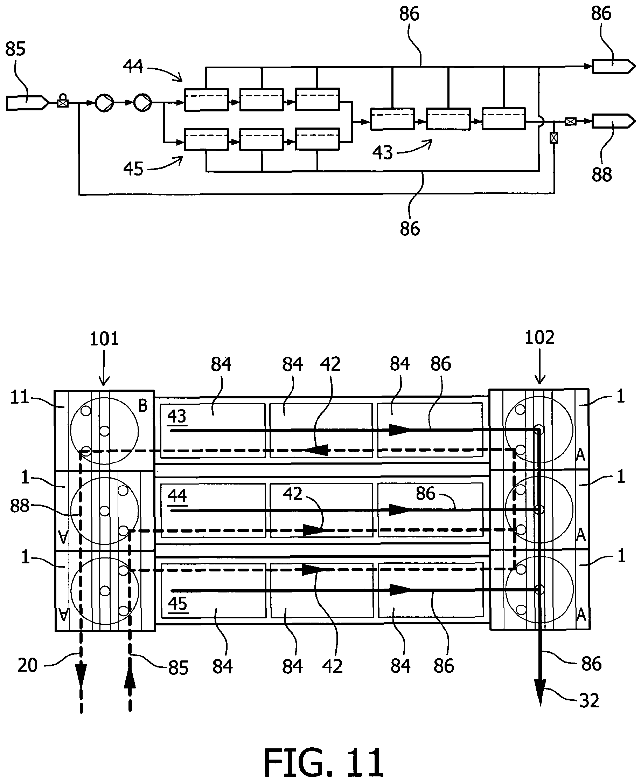

Referring to figure 11, an example is shown of an even more compact embodiment which comprises on the left-hand side (the infeed side) a front panel 101 which is constructed from three panel modules stacked onto each other, of which the two lower panel modules 1 (type A) and the upper panel module comprise a panel module 11 (type B). On the right (the discharge side) rear panel 102 is constructed from three panel modules 1 (type A) stacked onto each other, which moreover have the same orientation. As further shown in figure 11, three triple separating units (43, 44, 45) are arranged between the two panels (101, 102). Each triple separating unit is provided with three cylindrical membranes 84 arranged in series. The specific stacking of front panel 101 and rear panel 102 results in the parallel/series connection as shown in the top part of figure 11. The present arrangement reduces or prevents precipitation on the membranes at optimal efficiency.

Feed water 85 is supplied via the inlet to first module 1 and simultaneously carried in parallel through the two first separating units (44, 45) in the direction of arrow 42. A separation takes place simultaneously in the separating units, wherein permeate 86 is discharged as according to arrow 32 via the central outlet of the two lower panel modules 1 on the right. Concentrate 87 (a part of feed water 85) flowing out downstream on the peripheral side of the two separating units (44, 45) is carried via the impure outlet of the two lower panel modules 1 of rear panel 102 to the impure inlet of the third (from the bottom) or uppermost panel module 1, and from there to the impure side of third separating unit 43, in which it then passes through separating unit 43 from right to left as according to arrow 42. Once it has passed through third separating unit 43, the purified permeate 86 is discharged via the central opening of the third panel module 1 on the right, and the final concentrate 88 of the third panel module 11 on the left is discharged as according to arrow 20 via through-feed conduit 52 of the panel modules 1 on the left. It will be apparent that a membrane separation is achieved by the specific connection of panel modules 1 and 11, wherein the different separating units are passed through in parallel and then in series. In this way a high degree of purity is achieved without much space being necessary, wherein the forming of precipitation on the membranes is better prevented at optimal efficiency.

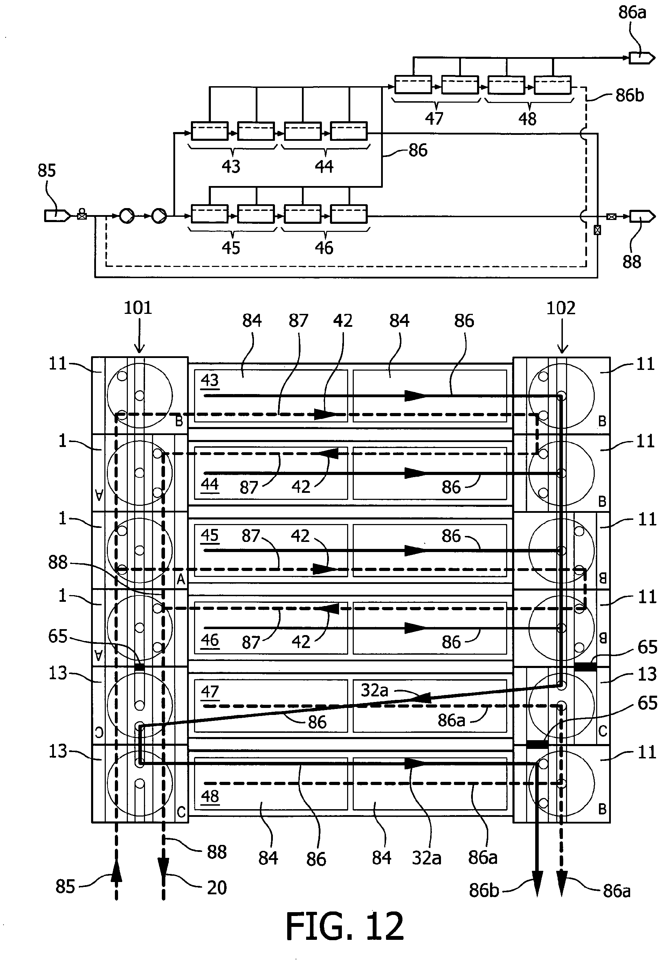

Referring to figure 12, a final example is shown of yet another embodiment, wherein panel module 13 (type C) is elucidated. The shown embodiment comprises on the left-hand side (the infeed side) a front panel 101 which is constructed from the bottom from two mutually stacked panel modules 13 (type C), three panel modules 1 (type A) and finally an upper panel module 11 (type B). On the right-hand side (the discharge side) rear panel 102 is constructed from the bottom from a panel module 11 (type B), a panel module 13 (type C) stacked thereon and then once again four stacked panel modules 11 of the type B. The stack is further provided with three plugs 65 which block the passage in a through-feed channel at that location. As further shown in figure 12, six twofold separating units (43, 44, 45, 46, 47, 48) are arranged between the two panels (101, 102). Each twofold separating unit is provided with two cylindrical membranes 84 arranged in series. The specific stacking of front panel 101 and rear panel 102 results in the circuit as shown in the top part of figure 12.

Feed water 85 is supplied via the inlet to the lowest module 13 on the left and from there to the uppermost panel module 11 via mutually coupled through-feed channels 52 of the panel modules (in the sequence 13, 13, 1, 1 and 1). Owing to the type (type A) and the orientation of the fourth panel module from the bottom, the feed water is then carried simultaneously in parallel through the fourth and sixth separating units (45, 43) in the direction of arrows 42 from left to right. A separation takes place simultaneously in the separating units (45, 43), wherein permeate 86 is discharged via the central outlet of the uppermost panel modules 11 (type B) on the right to the inlet of the second (from the bottom) panel module 13 (type C). Because the separating units (43, 44) and (45, 46) are connected in parallel, a double separation takes place, wherein the permeate 86 separated in the separating units (44, 46) is likewise discharged to the inlet of the second (from the bottom) panel module 13 (type C). Concentrate 87 (a part of feed water 85) which flows out downstream on the peripheral side of the four separating units (43, 44, 45 and 46) connected in parallel is discharged as according to arrow 20 in the form of final concentrate 88 via the impure outlets of the third and fifth (from the bottom) panel modules 1 of front panel 102. By applying panel modules 13 the permeate 86 carried to these modules is purified once again by carrying this permeate 86 as according to arrows 32a through the two lower separating units (47, 48) connected in series. The permeate 86 to be extra-purified is separated into a more purified fraction 86a, which is discharged via the central outlet of panel module 13 (type C), and a separated impure fraction 86b which, if desired, is fed back to the inlet of the lowest panel module 13 of front panel 101 (left side of figure 12), where it is combined with feed water 85. It will be apparent that a membrane separation is obtained of increased purity and with a compact device by the specific connection of panel modules 1, 11 and 13.

It will further be apparent that the invention is by no means limited to the above described exemplary embodiments. It is thus also possible to place multiple racks (being an assembly of a number of coupled separating units) on a single set of infeed and control modules. The number of racks on one set of infeed and control modules is preferably limited to two, although more racks are quite possible.

## Claims

1. Device (100) for purifying raw water, comprising
- an inlet (40) for the raw water;
- a conduit system connected to the inlet;
- a pump system (41) incorporated in the conduit system for carrying the feed water under pressure through the conduit system;
- at least one separating unit (43-48) incorporated in the conduit system for separating the feed water into a pure fraction (permeate) and an impure fraction (concentrate);
- outlets (32) for the pure and the impure fraction connected to the conduit system, wherein the device comprises two panels (101, 102) forming a front and a rear panel which are held at a mutual distance and between which at least one separating unit is situated, wherein the panels (101, 102) are constructed from mutually coupled panel modules (1, 11, 13, 15, 26) which form a bearing frame for the at least one separating unit (43-48) by directly coupling it to panel modules (1, 11, 13, 15, 26), which panel modules comprise through-feed conduits which in connected situation form at least a part of the conduit system which runs between the front and rear panel, and wherein at least one of the panel modules (A) has a connection (60) for a separating unit (1, 11, 13, 15, 26), and a through-feed conduit (90) for permeate coupled to the connection (60), a through-feed conduit (52) for feed or impure water coupled to the connection (60), and a through-feed conduit (52) for feed or impure water not coupled to the connection (60).

2. Device as claimed in claim 1, wherein the through-feed conduits of the panel modules in the connected situation form the whole conduit system.

3. Device as claimed in claim 1 or 2, wherein the panels (101, 102) comprise a maximum of five mutually differing panel modules (1, 11, 13, 15, 26).

4. Device as claimed in any of the foregoing claims, wherein the front panel (101) of the panels comprises an infeed module (15), which infeed module (15) comprises the inlet (23) and an outlet (25) for the feed water coupled via a through-feed conduit (230) to the inlet (23), and further inlets (19) and outlets (21), likewise coupled via through-feed conduits (190), for permeate and concentrate coming from a coupled panel module (1, 11, 13, 15, 26).

5. Device as claimed in any of the foregoing claims, wherein the rear panel (102) of the panels comprises a control module (26), which control module (26) comprises inlets (30, 31) and outlets (28, 32) coupled via through-feed conduits (310, 330) for waste water and concentrate coming from a coupled panel module, and is further provided with control means and/or measuring means.

6. Device as claimed in any of the foregoing claims, comprising a panel module of a second type (B), which has a connection (60) for a separating unit (43-48) and a through-feed conduit (90) for permeate coupled to the connection, wherein the panel module (B) further comprises a through-feed conduit (52) for feed or impure water coupled to the connection, but no through-feed conduit for feed or impure water not coupled to the connection (60).

7. Device as claimed in any of the foregoing claims, comprising a panel module of a third type (C), which has a connection (60) for a separating unit (43-48) and for permeate coming from another panel module, in addition to a through-feed conduit (140) coupled to the connection (60) for permeate that has been filtered once again, wherein the panel module (C) further comprises at least two through-feed conduits (52) for feed or impure water not coupled to the connection (60), but no through-feed conduit (52) for feed or impure water coupled to the connection (60).

8. Device as claimed in any of the foregoing claims, wherein the panel modules (1, 11, 13, 15, 26) are block-shaped and the through-feed channels debouch in an upper surface and a lower surface of the panel modules, wherein the panel modules (1, 11, 13, 15, 26) are preferably provided with connecting bushes, wherein the panels (101, 102) and the panel modules (1, 11, 13, 15, 26) are more preferably mutually connected by a pull rod (50, 51), for which purpose the panel modules are provided with engaging means (6, 8) for a pull rod (50, 51).

9. Device as claimed in any of the foregoing claims, wherein the at least one separating unit (43-48) comprises a water purification filter of the membrane type, provided with a first connection for supplying feed water, a second connection for discharging the pure fraction (permeate), and a third connection for discharging the impure fraction (concentrate).

10. Device as claimed in any of the foregoing claims, wherein the conduit system comprises a return conduit (49) for feedback of a part of the impure fraction to a point in the conduit system located upstream of the pump system (41) for the purpose of mixing this part with the raw water being supplied to the pump system (41).

11. Device as claimed in any of the foregoing claims, further comprising a break tank and/or filter unit received upstream of the at least one separating unit in the conduit system for the purpose of removing the larger dirt particles from the raw water by pre-filtering thereof, and/or dosing device for dosed feeding of an anti-fouling agent to the water.

12. Device as claimed in any of the foregoing claims, wherein the device comprises a flushing circuit for flushing the at least one separating unit (43-48) with raw water or clean water.

## Patentansprüche

1. Vorrichtung (100) zum Reinigen von Rohwasser, die aufweist;
- einen Einlass (40) für das Rohwasser;
- ein Leitungssystem, das mit dem Einlass verbunden ist;
- ein Pumpensystem (41), das in das Leitungssystem integriert ist, um das Speisewasser unter Druck durch das Leitungssystem zu transportieren:
- wenigstens eine Trenneinheit (43 - 48), die in das Leitungssystem integriert ist, um das Speisewasser in einen reinen Anteil (Permeat) und einen unreinen Anteil (Konzentrat) zu trennen;
- Auslässe (32) für den reinen und den unreinen Anteil, die mit dem Leitungssystem verbunden sind, wobei die Vorrichtung zwei Platten (101, 102) aufweist, die eine vordere und hintere Platte bilden, die in einem gegenseitigen Abstand gehalten werden und zwischen denen wenigstens eine Trenneinheit angeordnet ist,
wobei die Platten (101, 102) aus gegenseitig gekoppelten Plattenmodulen (1, 11, 13, 15, 26) gebildet sind, die einen Trägerrahmen für die wenigstens eine Trenneinheit (43 - 48) bilden, indem sie diese direkt mit den Plattenmodulen (1, 11, 13, 15, 26) koppeln, wobei die Plattenmodule durchgehende Zuleitungen aufweisen, die im verbundenen Zustand wenigstens einen Teil des Leitungssystems bilden, das zwischen der vorderen und hinteren Platte verläuft, und wobei wenigstens eines von den Plattenmodulen (A) ein Verbindungselement (60) für eine Trenneinheit (1, 11, 13, 15, 26) hat, und eine durchgehende Zuleitung (90) für das Permeat, die mit dem Verbindungselement (60) verbunden ist, eine durchgehende Zuleitung (52) für Speisewasser oder unreines Wasser, die mit dem Verbindungselement (60) gekoppelt ist, und eine durchgehende Leitung (52) für Speisewasser oder unreines Wasser, die nicht mit dem Verbindungselement (60) gekoppelt ist.

2. Vorrichtung nach Anspruch 1, wobei die durchgehenden Zuleitungen der Plattenmodule im verbundenen Zustand das gesamte Leitungssystem bilden.

3. Vorrichtung nach Anspruch 1 oder 2, wobei die Platten (101, 102) ein Maximum von fünf voneinander verschiedenen Plattenmodulen (1, 11, 13, 15, 26) aufweisen.

4. Vorrichtung nach einem der vorhergehenden Ansprüche, wobei die Frontplatte (101) der Platten ein Einspeisungsmodul (15) aufweist, wobei das Einspeisungsmodul (15) den Einlass (23) und einen Auslass (25) für das Speisewasser aufweist, der über eine durchgehende Zuleitung (230) mit dem Einlass (23) verbunden ist, und weitere Einlässe (19) und Auslässe (21), die ebenso über durchgehende Zuleitungen (190) für Permeat und Konzentrat gekoppelt sind, die aus einem gekoppelten Plattenmodul (1, 11, 13, 15, 26) stammen.

5. Vorrichtung nach einem der vorhergehenden Ansprüche, wobei die hintere Platte (102) der Platten ein Steuermodul (26) aufweist, wobei das Steuermodul (26) Einlässe (30, 31) und Auslässe (28, 32) aufweist, die über durchgehende Zuleitungen (310, 330) für Abwasser und Konzentrat, die aus einem gekoppelten Plattenmodul stammen, gekoppelt sind, und es weiterhin mit einem Steuermittel und/oder einem Messmittel vorgesehen ist.

6. Vorrichtung nach einem der vorhergehenden Ansprüche, die ein Plattenmodul eines zweiten Typs (B) aufweist, das ein Verbindungselement (60) für eine Trenneinheit (43 - 48) hat und eine durchgehende Zuleitung (90) für ein Permeat, die mit dem Verbindungselement gekoppelt ist, wobei das Plattenmodul (B) weiterhin eine durchgehende Zuleitung (52) für Speisewasser oder unreines Wasser aufweist, die mit dem Verbindungselement gekoppelt ist, aber keine durchgehende Zuleitung für Speisewasser oder unreines Wasser, die nicht mit dem Verbindungselement (60) gekoppelt ist.

7. Vorrichtung nach einem der vorhergehenden Ansprüche, die ein Plattenmodul eines dritten Typs (C) aufweist, das ein Verbindungselement (60) für eine Trenneinheit (43 - 48) und für Permeat hat, das aus einem anderen Plattenmodul stammt, zusätzlich zur durchgehenden Zuleitung (140), die mit dem Verbindungselement (60) für Permeat gekoppelt ist, das erneut gefiltert wurde, wobei das Plattenmodul (C) weiterhin wenigstens zwei durchgehende Leitungen (52) für Speisewasser oder unreines Wasser aufweist, die nicht mit dem Verbindungselement (60) gekoppelt sind, aber keine durchgehende Zuleitung (52) für Speisewasser oder unreines Wasser, die mit dem Verbindungselement (60) gekoppelt ist.

8. Vorrichtung nach einem der vorhergehenden Ansprüche, wobei die Plattenmodule (1, 11, 13, 15, 26) blockförmig sind und die durchgehenden Kanäle an einer Oberseite und einer Unterseite der Plattenmodule heraustreten, wobei die Plattenmodule (1, 11, 13, 15, 26) vorzugsweise mit Verbindungsbuchsen vorgesehen sind, wobei die Platten (101, 102) und die Plattenmodule (1, 11, 13, 15, 26) bevorzugter gegenseitig durch eine Zugstange (50, 51) verbunden sind, wobei die Plattenmodule für diesen Zweck mit Eingriffsmitteln (6, 8) für eine Zugstange (50, 51) vorgesehen sind.

9. Vorrichtung nach einem der vorhergehenden Ansprüche, wobei die wenigstens eine Trenneinheit (43 - 48) einen Wasserreinigungsfilter des Membrantyps aufweist, der mit einem ersten Verbindungselement zum Zuleiten von Speisewasser vorgesehen ist, einem zweite Verbindungselement zum Ausgeben des reinen Anteils (Permeat), und einem dritten Verbindungselement zum Ausgeben des unreinen Anteils (Konzentrat).

10. Vorrichtung nach einem der vorhergehenden Ansprüche, wobei das Leitungssystem eine Rückleitung (49) zum Rückführen eines Teils des unreinen Anteils zu einem Punkt im Leitungssystem aufweist, der vorgelagert zum Pumpensystem (41) ist, für den Zweck des Mischens dieses Anteils mit dem Rohwasser, das dem Pumpensystem (41) zugeführt wird.

11. Vorrichtung nach einem der vorhergehenden Ansprüche, die weiterhin aufweist einen Zwischentank und/oder eine Filtereinheit, die vorgelagert von der wenigstens einen Trenneinheit im Leitungssystem zum Zwecke des Entfernens von größeren Schmutzpartikeln aus dem Rohwasser durch Vorfilterung davon aufgenommen ist, und/oder eine Dosierungsvorrichtung zum dosierten Zuführen eines Fäulnis verhindernden Mittel zum Wasser.

12. Vorrichtung nach einem der vorhergehenden Ansprüche, wobei die Vorrichtung einen Spülkreislauf aufweist, um die wenigstens eine Trenneinheit (43 - 48) mit Rohwasser oder sauberem Wasser zu spülen.

## Revendications

1. Dispositif (100) de purification d'eau brute, comprenant
- une admission (40) pour l'eau brute ;
- un système de conduite raccordé à l'admission ;
- un système de pompe (41) incorporé dans le système de conduite pour transporter l'eau d'alimentation sous pression à travers le système de conduite ;
- au moins une unité de séparation (43 à 48) incorporée dans le système de conduite pour séparer l'eau d'alimentation en une fraction pure (perméat) et une fraction impure (concentrat) ;
- des refoulements (32) pour la fraction pure et la fraction impure raccordés au système de conduite, dans lequel le dispositif comprend deux panneaux (101, 102) formant un panneau avant et un panneau arrière qui sont tenus à une distance mutuelle et entre lesquels au moins une unité de séparation est située, dans lequel les panneaux (101, 102) sont constitués de modules de panneau couplés mutuellement (1, 11, 13, 15, 26) qui forment un cadre porteur pour l'au moins une unité de séparation (43 à 48) en la couplant directement à des modules de panneau (1, 11, 13, 15, 26), lesquels modules de panneau comprennent des conduites d'alimentation qui, dans une situation raccordée, forment au moins une partie du système de conduite qui court entre le panneau avant et le panneau arrière, et dans lequel au moins l'un des modules de panneau (A) comporte un raccord (60) pour une unité de séparation (1, 11, 13, 15, 26), et une conduite d'alimentation (90) pour du perméat couplée au raccord (60), une conduite d'alimentation (52) pour de l'eau d'alimentation ou impure couplée au raccord (60), et une conduite d'alimentation (52) pour de l'eau d'alimentation ou impure non couplée au raccord (60).

2. Dispositif selon la revendication 1, dans lequel les conduites d'alimentation des modules de panneau dans la situation raccordée forment le système de conduite entier.

3. Dispositif selon la revendication 1 ou 2, dans lequel les panneaux (101, 102) comprennent un maximum de cinq modules de panneau différant mutuellement (1, 11, 13, 15, 26).

4. Dispositif selon l'une quelconque des revendications précédentes, dans lequel le panneau avant (101) des panneaux comprend un module d'alimentation (15), lequel module d'alimentation (15) comprend l'admission (23) et un refoulement (25) pour l'eau d'alimentation couplé via une conduite d'alimentation (230) à l'admission (23), et en outre des admissions (19) et des refoulements (21), de même couplés via des conduites d'alimentation (190), pour du perméat et du concentrat provenant d'un module de panneau couplé (1, 11, 13, 15, 26).

5. Dispositif selon l'une quelconque des revendications précédentes, dans lequel le panneau arrière (102) des panneaux comprend un module de commande (26), lequel module de commande (26) comprend des admissions (30, 31) et des refoulements (28, 32) couplés via des conduites d'alimentation (310, 330) pour des eaux usées et du concentrat provenant d'un module de panneau couplé, et est en outre pourvu de moyens de commande et/ou de moyens de mesure.

6. Dispositif selon l'une quelconque des revendications précédentes, comprenant un module de panneau d'un deuxième type (B), qui comporte un raccord (60) pour une unité de séparation (43 à 48) et une conduite d'alimentation (90) pour du perméat couplée au raccord, dans lequel le module de panneau (B) comprend en outre une conduite d'alimentation (52) pour de l'eau d'alimentation ou impure couplée au raccord, mais aucune conduite d'alimentation pour l'eau d'alimentation ou impure non couplée au raccord (60).

7. Dispositif selon l'une quelconque des revendications précédentes, comprenant un module de panneau d'un troisième type (C), qui comporte un raccord (60) pour une unité de séparation (43 à 48) et pour du perméat provenant d'un autre module de panneau, en plus d'une conduite d'alimentation (140) couplée au raccord (60) pour du perméat qui a été filtré une fois de plus, dans lequel le module de panneau (C) comprend en outre au moins deux conduites d'alimentation (52) pour de l'eau d'alimentation ou impure non couplées au raccord (60), mais aucune conduite d'alimentation (52) pour de l'eau d'alimentation ou impure couplée au raccord (60).

8. Dispositif selon l'une quelconque des revendications précédentes, dans lequel les modules de panneau (1, 11, 13, 15, 26) sont en forme de bloc et les canaux d'alimentation débouchent dans une surface supérieure et une surface inférieure des modules de panneau, dans lequel les modules de panneau (1, 11, 13, 15, 26) sont de préférence pourvus de douilles de raccord, dans lequel les panneaux (101, 102) et les modules de panneau (1, 11, 13, 15, 26) sont de manière davantage préférée raccordés mutuellement par une tige de traction (50, 51), auquel cas les modules de panneau sont pourvus de moyens d'engagement (6, 8) pour une tige de traction (50, 51).

9. Dispositif selon l'une quelconque des revendications précédentes, dans lequel l'au moins une unité de séparation (43 à 48) comprend un filtre de purification d'eau de type membrane, pourvu d'un premier raccord pour fournir de l'eau d'alimentation, d'un deuxième raccord pour évacuer la fraction pure (perméat) et d'un troisième raccord pour évacuer la fraction impure (concentrat).

10. Dispositif selon l'une quelconque des revendications précédentes, dans lequel le système de conduite comprend une conduite de retour (49) pour rebouclage d'une partie de la fraction impure vers un point dans le système de conduite situé en amont du système de pompe (41) dans le but de mélanger cette partie avec l'eau brute qui est fournie au système de pompe (41).

11. Dispositif selon l'une quelconque des revendications précédentes, comprenant en outre un réservoir de rupture et/ou une unité de filtre reçus en amont de l'au moins une unité de séparation dans le système de conduite dans le but d'éliminer les particules de saleté plus grandes de l'eau brute en les préfiltrant, et/ou un dispositif de dosage pour une alimentation dosée de l'eau en un agent antisalissure.

12. Dispositif selon l'une quelconque des revendications précédentes, dans lequel le dispositif comprend un circuit de chasse pour chasser l'au moins une unité de séparation (43 à 48) avec de l'eau brute ou de l'eau propre.
